# EUROPEAN PATENT APPLICATION

(11) **EP 3 683 087 A1**
(43) Date of publication of application: **22.07.2020**
(21) Application number: 19152236.6
(22) Date of filing: 17.01.2019
(51) Int. Cl.: B60L 53/30, B60L 3/04, H02P 29/02

(54) **RELAY WITH TEMPERATURE SENSORS FOR SAFETY APPLICATIONS ACCORDING TO ISO 26262**

(71) Applicant: Samsung SDI Co., Ltd., Gyeonggi-do 17084 (KR)
(72) Inventor: Hofer, Maximilian, 8230 Hartberg (AT); Haindl, Michael, 8230 Hartberg (AT)
(74) Representative: Gulde & Partner

(57) **Abstract**

The present invention refers to a relay suitable for use in safety applications, a relay system and a method for operating the latter, the relay comprising: a first main connector configured for getting connected with a first conductor; a second main connector configured for getting connected with a second conductor; a first busbar connected with the first main connector; a second busbar connected with the second main connector; a circuit breaker moveable between a closed position and an open position, wherein in the closed position, the circuit breaker is in contact to both, the first busbar and the second busbar, and in the open position, the circuit breaker is spaced apart from both, the first busbar and the second busbar; a coil for driving the circuit breaker; a first temperature sensing element is arranged on or at the first busbar.

## Description

### Field of the Invention

The present invention relates to a relay with temperature sensors, and in particular to a relay for use in safety applications of battery electric vehicles (BEVs), wherein the relay meets the requirements of ISO 26262. The present invention further relates to a relay system for use in safety applications using said relay with temperature sensors. Moreover, the present invention concerns a method for operating said relay system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. Battery systems usually comprise a battery management system (BMS) and/or battery management unit (BMU) for processing the aforementioned information. The BMS/BMU may communicate to the controllers of the various electrical consumers via a suitable communication bus, e. g. a SPI or CAN interface. Thus, the BMS/BMU is provided for managing the battery pack, such as by protecting the battery from operating outside its safe operating area, monitoring its state, calculating secondary data, reporting that data, controlling its environment, authenticating it and/or balancing it.

Independent of the degree of electrification (drive power between 10 kW to more as 120 kW), BEVs show high complexity of the vehicle electrical system: the operating voltage must be significantly increased in comparison to vehicles with a pure combustion motor (12 VDC / 24 VDC), and into the on-board electrical system, high-voltage batteries are integrated as rechargeable energy sources (see above). Accordingly, higher requirements - and partly new requirements - arise in BEVs with regard to components such as relays, connectors and wires. For example, the operating and safety concept of a BEV must provide that the touchability of hazardous potentials is excluded and personal protection is guaranteed, since voltages of up to 1,000 VDC and higher as well as short-circuit currents in the order of magnitude of kilo-Ampere may occur.

Furthermore, the high-voltage energy storage must be actively disconnectable from the electrical system at various occasions and also be connectable again. In normal operation, during maintenance / servicing and in particular in the event of an accident or in the event of a fault (e. g. crash, line interruption), galvanic isolation must be possible. In other words, current breaking is a complex and safety-relevant functionality in a BEV, and in particular in a battery system of a BEV.

Due to the fact that safety standards such as ISO 26262 have to be considered, high-and-low-side relays are used in practice. Further, additional relays for fast charge application / functionality of the BEV are required. Up to date, this is typically realized with standard relays, no safety measures are directly implemented in the relays till now. A disadvantage of this state-of-the-art approach is that the relays have to be designed according the most severe (safety) requirements. Therefore, the performance of the relays has to be much higher than actually needed, resulting in the costs of the relays becoming highly expensive.

In particular, for the relay sourcing, different worst case assumptions have to be considered. A typical example of a set of assumptions is as follows: The environment temperature is supposed to be 60° C. The conductor temperature is also supposed to be 60° C without self-heating influence. Worst case assumptions are further made for the resistance of the coil of the relays. These assumptions have to be chosen in accordance to the fact that the resistance of a coil depends from its temperature, but the temperature of the coil in a relay is unknown for a variety of situations.

In other words, in order to meet the safety requirements, the design of the relays is much more robust than it needs to be due to the various worst cast assumptions as outlined above, ending up in very costly devices. Nevertheless, the implementation of an over current monitoring (OCM) may be necessary also in case of these devices.

Therefore, there is a need for a relay that allows for a cost reduction, but at the same time meets the safety requirements according to various standards such as the ISO 26262. There is further a need for a system, in which this relay can be operated. Further, there is a need for a method for operating said system.

It is thus an object of the present invention to overcome or reduce at least some of the drawbacks of the prior art and to provide a relay, a relay system, and a method for operating said relay system that allows for a cost reduction while at the same time meeting the safety requirements according to various standards such as the ISO 26262.

These objects are achieved by the relay, the relay system, and the method for operating a relay system as disclosed by the independent claims.

The present invention provides a way that a relay can be used in safety-critical situations without the need that the relay is adapted such as to be suitable in various worst-case scenarios. Instead, a cheap way of monitoring the working conditions of the relay is provided such that the relay can be timely forced to break the high (voltage) current. The costs for a relay according to the invention that is equipped with components needed for said monitoring are significantly cheaper than a relay being designed for operating under the above-sketched worst-case scenarios.

In particular, the present invention uses temperature sensing elements such as NTC (negative temperature coefficient) thermistors or PTC (positive temperature coefficient thermistors), hereinafter also referred to as NTC / PTC sensors or NTC / PTC sensing elements, in order to provide a relay allowing for monitoring its operation and working conditions. Temperature measurement is very cheap in relation to the price of the relay. In particular, the costs of NTC / PTC sensors are negligible when compared to the costs of the whole relay according to the invention. Of course, it is prerequisite to use the relay according to the invention together with an over current monitoring (OCM). However, the relay according to the invention allows to perform an OCM, wherein real temperature values can be taken as input for the OCM, providing both, a cheap and accurate monitoring of the current.

It may be advantageous to provide also a simple way to connect the relay according to the invention to one or more control devices or means for operating the relay. One possibility therefor is to provide a special connector as disclosed by the independent claims. Such a connector will increase both, the space needs and costs compared to standard low-voltage connectors due to additional pins for temperature sensors, as additional pins are needed. Nevertheless, embodiments equipped with such a connector are still cheaper in production than a relay is adapted for working under worst-case scenarios. As regards electronics, the evaluation of the temperature signal, e. g., a resistor value of an NTC / PTC thermistor, is also very cheap. As a rough estimate: some tens of cents have to be invested regarding the equipment of the relay with temperature sensors and the electronics for an evaluation of the temperature inside the relay, but at the same time, some euros are saved with regard to the costs of the relay itself.

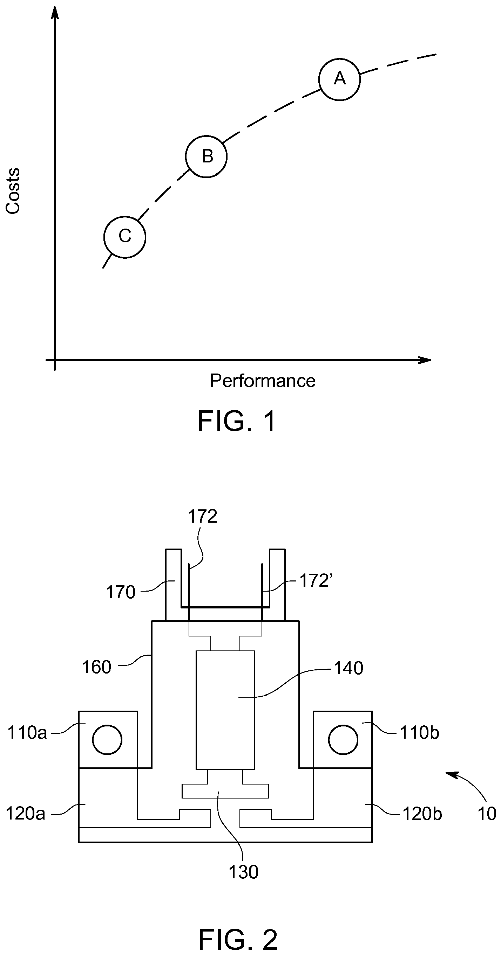

Fig. 1 illustrates the relationship between costs of a relay and performance with regard to (A) the prior art, (B) the present invention, and (C) a theoretical optimum. The abscissa relates to the performance of the relay, the ordinate relates to the costs in manufacturing and thus (up to a factor) the purchase price of the respective relay design. As the diagram is only schematically, the units to the axes are not provided. However, as pointed out above, the cost for the relay for usage in a BEV (cf. "A" in Fig. 1) are very high up to some tens of euros.

With the approach according to the invention (cf. "B" in Fig. 1), this value can be reduced significantly, since relays with *lower* performance can be employed. Of course, the cost-performance-relation could still be improved and approaches to an optimum (cf. "C" in Fig. 1). However, the optimum is a theoretical limiting value, which cannot be reached by real devices.

The improvement of the cost-performance-relation is reflected by the shape of the curve in the diagram of Fig. 1: The lower the requirements as to the performance of the relay, the lower the price for manufacturing / purchase of the relay.

### Summary of Invention

Embodiments of the present disclosure seek to solve at least one of the problems existing in the prior art to at least some extent.

In particular, one aspect of the invention is related to a relay suitable for use in safety applications. The relay comprises: a first main connector configured for getting connected with a first conductor; a second main connector configured for getting connected with a second conductor; a first busbar connected with the first main connector; a second busbar connected with the second main connector; a circuit breaker. The circuit breaker is moveable between a closed position and an open position. In the closed position, the circuit breaker is in contact to both, the first busbar and the second busbar so as to establish an electrical connection between the busbars. In the open position, the circuit breaker is spaced apart from both, the first busbar and the second busbar. Thus, in the open position, an electrical connection between the busbars is not established.

Here and in the following, the terms "electrical connection" of "electrically connected" concerning two elements, e. g. the busbars, refers to any cases or situations, wherein an electric current flows - or may flow in the presence of a respective electrical potential - from one of these elements to the other, also in cases wherein these elements are not in direct mechanical connection. In the latter case, the elements must be bridged by a conductive third element, e. g. a wire or the circuit breaker.

Further, the relay comprises a coil for driving the circuit breaker according to a current flowing through the coil. In other words, the presence of magnetic field generated by the coil when the latter is supplied by a current or the absence of such a magnetic field may urge the coil breaker to move to its open or its closed position.

Moreover, a first temperature sensing element is arranged on or at the first busbar (120a).

"On the busbar" denotes that the temperature sensing element is arranged directly on the busbar. However, an electrically insulating layer may be formed between the busbar and the temperature sensing element. "At the busbar" denotes that the temperature sensing element is located in the vicinity of the busbar such that the temperature of the busbar within a predefined temperature range is measurable by the temperature sensing element, even when the latter is not directly arranged on the busbar. This applies, if applicable, mutatis mutandis for other temperature sensors that may be used in other embodiments (see below), wherein instead of a busbar, a coil may be used.

In a preferred embodiment of the relay according to the invention, a second temperature sensing element is arranged on or at the second busbar.

In one embodiment of the relay, the first and second main connector as well as the first and second busbar are each configured to conduct high-voltage current, in particular to conduct high-voltage direct current (HVDC). High-voltage current may refer to current flowing in a potential between 100 kV and 1,500 kV.

In a preferred embodiment of the relay, the first temperature sensing element is an NTC (negative temperature coefficient; see below) thermistor or a PCT (positive temperature coefficient; see below) thermistor.

In a preferred embodiment of the relay, the second temperature sensing element is an NTC thermistor or a PTC thermistor.

In one embodiment of the relay, a third temperature sensing element is arranged on or at the coil. The third sensing element may be an NTC thermistor or a PTC thermistor.

In a preferred embodiment of the relay, the relay is located in a housing.

In one embodiment of the relay, the relay further comprises a first control connector configured for connecting the relay to a means for controlling the current supplied to the coil. The first control connector has a first coil current junction means and a second coil current junction means. The coil has a first terminal and a second terminal. The first coil current junction means is electrically connected with the first terminal of the coil and the second coil current junction means is electrically connected with the second terminal of the coil.

In one embodiment of the relay, the first control connector is a plug and both, the first and second coil current junctions means are formed as pins in the plug.

In one embodiment of the relay, the first control connector is a socket and both, the first and second coil current junction means are formed as receiving holes in the socket.

In one embodiment of the relay, the first control connector is fixed on the housing.

In one embodiment of the relay, the relay further comprises a second control connector configured for connecting the relay to a means for receiving and evaluating the temperature signals outputted by each of the temperature sensing elements comprised in the relay. The second control connector comprises, for each temperature sensing element comprised in the relay, a first sensing element junction means and a second sensing element junction means. Each of the temperature sensing elements has a first terminal for being electrically connected to ground, GND, and a second terminal for being electrically connected to the means for receiving and evaluating the output signal of the respective temperature sensing elements. For each temperature sensing element, the first terminal is electrically connected with the first sensing element junction means for the respective temperature sensing element and the second terminal is electrically connected with the second sensing element junction means for the respective temperature sensing element.

In one embodiment of the relay, the second control connector is a plug and the first and second sensing element junctions means for each temperature sensing element are formed as pins in the plug.

In one embodiment of the relay, the second control connector is a socket and the first and second sensing element junction means for each temperature sensing element are formed as receiving holes in the socket.

In one embodiment of the relay, the second control connector is fixed on the housing.

In one embodiment of the relay, the relay further comprises a control connector configured for connecting the relay to a means for controlling the current supplied to the coil. Said control connector has a first coil current junction means and a second coil current junction means. The coil has a first terminal and a second terminal. The first coil current junction means is electrically connected with the first terminal of the coil and the second coil current junction means is electrically connected with the second terminal of the coil. Said control connector is further configured for connecting the relay to a means for receiving and evaluating the temperature signals outputted by each of the temperature sensing elements comprised in the relay. The said control connector comprises, for each temperature sensing element comprised in the relay, a first sensing element junction means and a second sensing element junction means. Each of the temperature sensing elements has a first terminal for being electrically connected to ground, GND, and a second terminal for being electrically connected to the means for receiving and evaluating the output signal of the respective temperature sensing elements. For each temperature sensing element, the first terminal is electrically connected with the first sensing element junction means for the respective temperature sensing element and the second terminal is electrically connected with the second sensing element junction means for the respective temperature sensing element.

In one embodiment of the relay, said control connector is a plug and each junctions means (i. e. any of the coil current junction means and any one of the sensing element junction means) is formed as a pin in the plug.

In one embodiment of the relay, said control connector is a socket and each junction means is formed as a receiving hole in the socket.

The control connector may be fixed on the housing.

A further aspect of the invention relates to a relay system for use in safety applications, the relay comprising: the relay according to the invention as described before; a means for controlling the current supplied to the coil; a means for receiving and evaluating the temperature signals of the temperature sensing elements comprised in the relay (100). The means for receiving and evaluating the temperature signals is configured to (permanently) receive, for each of the temperature sensing elements, the outputted temperature signal, to determine a temperature value based on the temperature signal, and to detect whether the temperature value exceeds a predetermined threshold value associated with the respective temperature sensing element. Further, the means for receiving and evaluating the temperature signals is further configured to send, upon detection that the temperature value evaluated for the temperature signal of one of the temperature sensing elements exceeds the predetermined threshold value associated with the respective temperature sensing element, a stopping signal to the means for controlling the current supplied to the coil. The means for controlling the current supplied to the coil is configured to control, upon receiving a stopping signal from the means for receiving and evaluating the temperature signals, the currant supplied to the coil such that, if the circuit breaker is in the closed position, the circuit breaker moves into the open position, or, if the circuit breaker is in the open position, the circuit breaker remains in the open position.

A third aspect of the invention relates to a method for operating the afore-described relay system. The method comprises the following steps:
a) permanently measuring, by each of the temperature sensing elements comprised in the relay, the temperature at the position of the respective temperature sensing element and permanently outputting, based on the measurement, a temperature signal to the means for receiving and evaluating the temperature signals;
b) permanently receiving, by the means for receiving and evaluating the temperature signals, the temperature signals outputted by each of the temperature sensing elements;
c) permanently determining, by the means for receiving and evaluating the temperature signals, for each of the received temperature signals, a temperature value based on the respective temperature signal;
d) permanently detecting, by the means for receiving and evaluating the temperature signals, for each of the determined temperature values in step c), whether the temperature value exceeds a predetermined threshold value associated with the respective temperature sensing element;
e) sending, by the means for receiving and evaluating the temperature signals, upon detection that the temperature value evaluated for the temperature signal of one of the temperature sensing elements exceeds the predetermined threshold value associated with the respective temperature sensing element, a stopping signal to the means for controlling the current supplied to the coil;
f) controlling, by the means for controlling the current supplied to the coil, upon receiving a stopping signal from the means for receiving and evaluating the temperature signals, the currant supplied to the coil such that, if the circuit breaker is in the closed position, the circuit breaker moves into the open position, or, if the circuit breaker is in the open position, the circuit breaker remains in the open position.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically the costs of a relay with in relation to (A) the prior art, (B) the present invention, and (C) a theoretical optimum;
- Fig. 2: illustrates a schematic cross section of a typical relay according to the prior art (simplified);
- Fig. 3: illustrates a schematic cross section of a relay according to an embodiment of the invention;
- Fig. 4: illustrates a schematic cross section of a connector with a pin connection suitable for use with a relay according to an embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," "spaced apart from," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of ±5% of the value centered on the value. Further, the use of "may" when describing embodiments of the present invention refers to "one or more embodiments of the present invention."

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Fig. 2 shows, in a simplified fashion, a schematic cross section of a typical relay 10 according to the prior art. A relay is an electrically operated switch. Typically, relays use an electromagnet to mechanically operate a switch. Relays are used where it is necessary to control a circuit by a separate low-power signal, or where several circuits must be controlled by one signal.

A simple electromagnetic relay 10 comprises a coil 140 of wire wrapped around a soft iron core (a solenoid; not shown), a movable circuit breaker 130 of a conductive material such as iron, and at least one pair of contacts comprising a first main connector 110a and a second main connector 110b, either of which configured for getting connected with a conductor. The relay 10 may comprise a housing 160. Each of the connectors 110a, 110b is attached to a busbar 120a, 120b. The circuit breaker is moveable between a position in which it is in contact to both, busbar 120a and busbar 120b so as to build a bridge allowing for a current flow between these busbars (in the following referred to as the "closed position"), and a position in which the bus is not in contact to the busbars 120a, 120b and thus preventing a current flow between the busbars 120a, 120b (in the following referred to as the "open position"). In Fig. 2, the circuit breaker 130 is shown in the open position.

In Fig. 2, the circuit breaker 130 is arranged such in the relay 10 that it is attracted to the open position when the coil 140 is excited by a current flowing through the coil 140 such that a magnetic field is generated by the coil 140. In order to move the circuit breaker 130 into the closed position, when the coil is not / no longer excited (idle position), a means such as a spring (not shown) may be arranged in the relay exerting a force to the circuit breaker 130 urging the latter to the closed position. Of course, a relay can also be designed such that - other than depicted in Fig. 2 - the circuit breaker 130 bridges the busbars 120a, 120b (closed position) when the coil is excited and is moved, by a means such as a spring, to a position spaced apart from the busbars 120a, 120b (open position) when the coil is not excited. In either case, the design of the coil and the current supplied to the coil to excited the latter must be chosen such that the magnetic force exerted to the circuit breaker 130 is not only capable to surmount the opposing force of the spring or the like, but also to additionally surmount, up to a certain extent, the force generated by a current that is possibly flowing through the busbars 120a, 120b and the circuit breaker 130.

Relay 10 of Fig. 2 may be employed in a BEV in order to switch high-voltage direct currents. The high-voltage current flows between the connectors 110a, 110b and thus flows through the busbars 120a, 120b as well as through the circuit breaker 130 when the latter is in the closed position. Then, an additional force is exerted on the circuit breaker 130 by the high-voltage current that is directed in the same direction as the force exerted by the spring or the like. Hence, the design of the relay, in particular of the coil 140, and the strength of the current supplied to the coil 140 must be adapted such that the force exerted on the circuit breaker 130 by magnetic field generated by the coil 140 is stronger than the sum of the forces of the spring or the like and the high-voltage current.

In Fig. 2, a control connector 170 in form of a plug is provided on top of the housing 160 that allows for an easy connection, via a corresponding socket (not shown), to an external control means for controlling the current supplied to the coil 140, with which control connector 170 is connected.

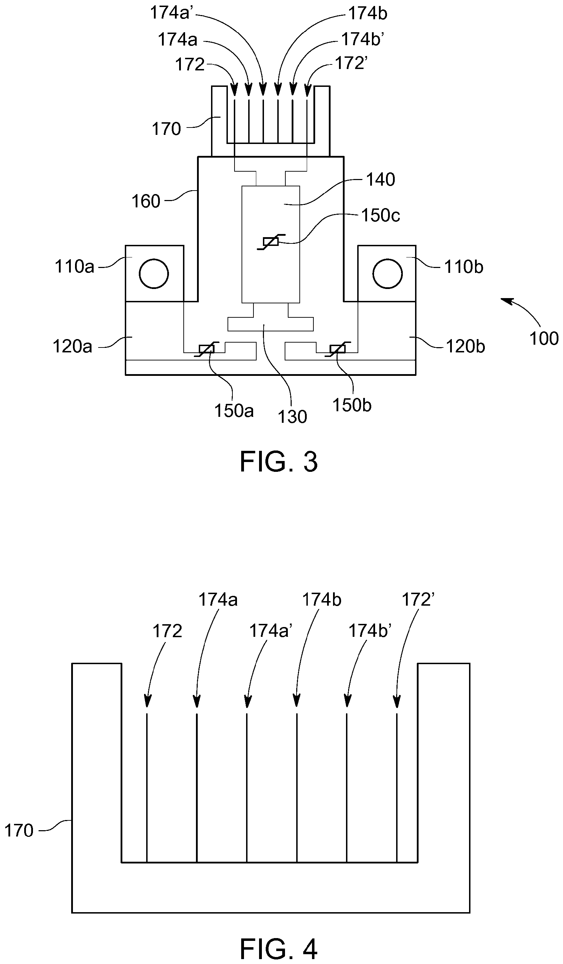

Fig. 3 illustrates a schematic cross section of a relay 100 according to an embodiment of the invention. With regard to its functionality as a switch, relay 100 of Fig. 3 corresponds to the relay 10 according to the prior art as depicted in Fig. 2 and described above. However, on each of the busbars 120a, 120b, a temperature sensing element 150a, 150b is arranged. Between the busbars 120a, 120b and the respective temperature sensing element 150a, 150b arranged on it may be an isolation layer, preferably made of a heat conductive material.

In principle, one temperature sensing element, for example the first temperature sensing element 150a arranged on the first busbar 120a, would be sufficient for the invention to work. The first temperature sensing element 150a is preferably an NTC (negative temperature coefficient) thermistor. However, for safety reasons (i. e., to minimize the probability that the temperature sensing functionality of the relay 100 fails), it is preferred that on the second busbar 120b is arranged a second temperature sensing element 150b. This way, the temperature of at least one of the busbar is measurable even in a case wherein one of the temperature sensing elements 150a, 150b fails to work. Moreover, the second temperature sensing element 150b is preferably a PTC (positive temperature coefficient) thermistor, as using different types of temperature sensing elements further increases the safety of the relay 100.

Relay 100 further comprises a third temperature sensing element 150c arranged on or at the coil 140. This way, also the temperature of the coil 140 can be measured. Also the third temperature sensing element 150 is preferably an NTC thermistor or an PCT thermistor.

A thermistor is a type of resistor whose resistance is dependent on temperature, more so than in standard resistors. Thermistors are of two opposite fundamental types: With NTC (negative temperature coefficient) thermistors, resistance decreases as temperature rises. With PTC (positive temperature coefficient) thermistors, resistance increases as temperature rises. These types of temperature sensing elements are particularly advantageous with respect to their low costs in manufacturing and sourcing.

The temperature sensing elements 150a, 150b arranged on the busbars 120a, 120b permanently measure the temperature of the latter. Correspondingly, temperature sensing element 150c measures the temperature of the coil. The signal of the temperature sensing elements 150a, 150b, 150c can then be used for an evaluation or determination of the temperature of the respective busbars or, respectively, the coil. Therefore, the signal must be sent to and received by a suitable evaluation means (not shown). The evaluation means, of course, is not part of the relay 100. In case that the temperatures measured by the temperature sensing elements exceed a certain predefined threshold value, the evaluation means may send a signal to a control means (not shown and likewise not part of the relay 100) that controls the current supplied to the coil 140 of the relay. Upon receiving a respective signal from the evaluation means, the control means may control the current supplied to the coil such that, if the circuit breaker 130 is in its closed position, the circuit breaker 130 is urged into the open position (as depicted in Fig. 3). Alternatively, the control means may descent the current flowing through the (busbars) of the relay 100, e. g. by shutting down some of the loads that are supplied with that current.

As the temperature signals that are generated by the temperature sensing elements 150a, 150b, 150c as output must be receivable by a suitable evaluation means, the terminals of each of the temperature sensing elements 150a, 150b, 150c are connected to a junction means comprised in a connector 170. The junction means may be a plug and the connector may be a plug as depicted in Figs. 3 and 4 (connection of the sensors to the respective junction means not shown). The plug is arranged on the housing 160 of the relay. In other embodiments, a socket is used instead of the plug, and the pins are then replaced by holes configured for receiving a suitable pin so as to establish an electrical contact.

For each temperature sensors, two junction means have to be used. In other words, if *N* temperature sensing elements are used in the relay, 2*N* junction means have to be provided in the connector for the temperature sensing elements. One junction means is configured to establish a connection with the ground (GND), the other junction means (Conn) is configured to establish a connection with the input port for the temperature signal of a suitable evaluation means.

The connector for the temperature signals can further be configured for establishing the contacts to the current supply for the coil. In the latter case, two further junction means (Relay_PLUS and Relay_MINUS) have to be provided in the connector. Accordingly, 2*N* + 2 junction means have to be provided in such a connector when using N temperature sensing elements in the relay.

Fig. 4 shows a schematic cross section of an embodiment of a connector suitable for use with a relay according to an embodiment of the invention, wherein two temperature sensing elements are used. These temperature sensing elements may be, for example, the temperature sensing elements 150a and 150b arranged on the busbars 120a and 120b, respectively. The connector of Fig. 4 is formed as a plug with pins as junction means. An exemplary assignment of the pins is as follows: pin 172 is connected to the positive terminal (Relay_PLUS) of coil 140, pin 174a is connected to the ground terminal (GND1) of temperature sensing element 150a, pin 174a' is connected to the output terminal (Conn1) of temperature sensing element 150a, pin 174b is connected to the ground terminal (GND2) of temperature sensing element 150b, pin 174b' is connected to the output terminal (Conn2) of temperature sensing element 150b, and pin 172' is connected to the negative terminal (Relay_MINUS) of coil 140.

### Reference signs

- 10: relay according to the prior art
- 100: relay according to one embodiment of the invention

- 110a: first main connector
- 110b: second main connector
- 120a: first busbar
- 120b: second busbar
- 130: circuit breaker
- 140: coil

- 150a: first temperature sensing element
- 150b: second temperature sensing element
- 150c: third temperature sensing element

- 160: housing
- 170: control connector
- 172: first coil current junction means
- 172': second coil current junction means
- 174a, b: first sensing element junction means
- 174a', b': second sensing element junction means

## Claims

1. A relay (100) suitable for use in safety applications comprising:
a first main connector (110a) configured for getting connected with a first conductor;
a second main connector (110b) configured for getting connected with a second conductor;
a first busbar (120a) connected with the first main connector (110a);
a second busbar (120b) connected with the second main connector (110b);
a circuit breaker (130) moveable between a closed position and an open position, wherein in the closed position, the circuit breaker is in contact to both, the first busbar (120a) and the second busbar (120b), and in the open position, the circuit breaker is spaced apart from both, the first busbar (120a) and the second busbar (120b);
a coil (140) for driving the circuit breaker (130);
**characterized in that**
a first temperature sensing element (150a) is arranged on or at the first busbar (120a).

2. The relay according to claim 1, wherein a second temperature sensing element (150b) is arranged on or at the second busbar (120b).

3. The relay according to claim 1 or 2, wherein the first and second main connector (110a, 110b) as well as the first and second busbar (120a, 120b) are each configured to conduct high-voltage current.

4. The relay according to any one of the preceding claims, wherein the first temperature sensing element (150a) is an NTC thermistor or a PCT thermistor.

5. The relay according to any one of claims 2 to 4, wherein the second temperature sensing element (150b) is an NTC thermistor or a PTC thermistor.

6. The relay according to any one of the preceding claims, wherein a third temperature sensing element (150c) is arranged on or at the coil (140).

7. The relay according to claim 6, wherein the third sensing element (150c) is an NTC thermistor or a PTC thermistor.

8. The relay according to any one of the preceding claims,
wherein the relay further comprises a first control connector (170) configured for connecting the relay (100) to a means for controlling a current supplied to the coil (140);
wherein the first control connector has a first coil current junction means (172) and a second coil current junction means (172');
wherein the coil (140) has a first terminal and a second terminal;
wherein the first coil current junction means (172) is electrically connected with the first terminal of the coil (140) and the second coil current junction means (172') is electrically connected with the second terminal of the coil (140).

9. The relay according to claim 8,
wherein either the first control connector is a plug and both, the first and second coil current junctions means are formed as pins in the plug; or
wherein the first control connector is a socket and both, the first and second coil current junction means are formed as receiving holes in the socket; and
wherein, the first control connector is fixed on a housing of the relay.

10. The relay according to any one of the preceding claims,
wherein the relay (100) further comprises a second control connector configured for connecting the relay (100) to a means for receiving and evaluating the temperature signals outputted by each of the temperature sensing elements (150a, 150b, 150c) comprised in the relay (100);
wherein the second control connector comprises, for each temperature sensing element (150a, 150b, 150c) comprised in the relay (100), a first sensing element junction means (174a, 174b) and a second sensing element junction means (174a', 174b');
wherein each of the temperature sensing elements (150a, 150b, 150c) has a first terminal for being electrically connected to ground, GND, and a second terminal for being electrically connected to the means for receiving and evaluating the output signal of the respective temperature sensing elements (150a, 150b, 150c);
wherein, for each temperature sensing element (150a, 150b, 150c), the first terminal is electrically connected with the first sensing element junction means (174a, 174b) for the respective temperature sensing element and the second terminal is electrically connected with the second sensing element junction means (174a, 174b) for the respective temperature sensing element.

11. The relay according to claim 10,
wherein either the second control connector is a plug and the first and second sensing element junctions means for each temperature sensing element are formed as pins in the plug; or
wherein the second control connector is a socket and the first and second sensing element junction means for each temperature sensing element are formed as receiving holes in the socket; and
wherein, as far as this claim depends on claim 8, the second control connector is fixed on the housing.

12. The relay according to any one of claims 1 to 7,
wherein the relay further comprises a control connector (170) configured for connecting the relay (100) to a means for controlling the current supplied to the coil (140);
wherein said control connector has a first coil current junction means (172) and a second coil current junction means (172');
wherein the coil (140) has a first terminal and a second terminal;
wherein the first coil current junction means (172) is electrically connected with the first terminal of the coil (140) and the second coil current junction means (172') is electrically connected with the second terminal of the coil (140); and
wherein said control connector is further configured for connecting the relay (100) to a means for receiving and evaluating the temperature signals outputted by each of the temperature sensing elements (150a, 150b, 150c) comprised in the relay (100);
wherein the said control connector comprises, for each temperature sensing element (150a, 150b, 150c) comprised in the relay (100), a first sensing element junction means (174a, 174b) and a second sensing element junction means (174a', 174b');
wherein each of the temperature sensing elements (150a, 150b, 150c) has a first terminal for being electrically connected to ground, GND, and a second terminal for being electrically connected to the means for receiving and evaluating the output signal of the respective temperature sensing elements (150a, 150b, 150c);
wherein, for each temperature sensing element (150a, 150b, 150c), the first terminal is electrically connected with the first sensing element junction means (174a, 174b) for the respective temperature sensing element and the second terminal is electrically connected with the second sensing element junction means (174a, 174b) for the respective temperature sensing element.

13. The relay according to claim 12,
wherein either said control connector is a plug and each junctions means is formed as a pin in the plug; or
wherein the said control connector is a socket and each junction means is formed as a receiving hole in the socket; and
wherein, as far as this claim depends on claim 8, the control connector is fixed on the housing.

14. A relay system for use in safety applications, the relay comprising:
the relay (100) according to any one of the preceding claims;
a means for controlling the current supplied to the coil (140);
a means for receiving and evaluating the temperature signals of the temperature sensing elements (150a, 150b, 150c) comprised in the relay (100);
wherein the means for receiving and evaluating the temperature signals is configured to receive, for each of the temperature sensing elements (150a, 150b, 150c), the outputted temperature signal, to determine a temperature value based on the temperature signal, and to detect whether the temperature value exceeds a predetermined threshold value associated with the respective temperature sensing element;
wherein the means for receiving and evaluating the temperature signals is further configured to send, upon detection that the temperature value evaluated for the temperature signal of one of the temperature sensing elements exceeds the predetermined threshold value associated with the respective temperature sensing element, a stopping signal to the means for controlling the current supplied to the coil (140); and
wherein the means for controlling the current supplied to the coil (140) is configured to control, upon receiving a stopping signal from the means for receiving and evaluating the temperature signals, the currant supplied to the coil (140) such that, if the circuit breaker (130) is in the closed position, the circuit breaker (130) moves into the open position, or, if the circuit breaker (130) is in the open position, the circuit breaker (130) remains in the open position.

15. A method for operating the relay system according to claim 14, the method comprising the following steps:
a) measuring, by each of the temperature sensing elements (150a, 150b, 150c) comprised in the relay (100), the temperature at the position of the respective temperature sensing element and permanently outputting, based on the measurement, a temperature signal to the means for receiving and evaluating the temperature signals;
b) receiving, by the means for receiving and evaluating the temperature signals, the temperature signals outputted by each of the temperature sensing elements (150a, 150b, 150c),
c) determining, by the means for receiving and evaluating the temperature signals, for each of the received temperature signals, a temperature value based on the respective temperature signal;
d) detecting, by the means for receiving and evaluating the temperature signals, for each of the determined temperature values in step c), whether the temperature value exceeds a predetermined threshold value associated with the respective temperature sensing element;
e) sending, by the means for receiving and evaluating the temperature signals, upon detection that the temperature value evaluated for the temperature signal of one of the temperature sensing elements exceeds the predetermined threshold value associated with the respective temperature sensing element, a stopping signal to the means for controlling the current supplied to the coil (140);
f) controlling, by the means for controlling the current supplied to the coil (140), upon receiving a stopping signal from the means for receiving and evaluating the temperature signals, the currant supplied to the coil (140) such that, if the circuit breaker (130) is in the closed position, the circuit breaker (130) moves into the open position, or, if the circuit breaker (130) is in the open position, the circuit breaker (130) remains in the open position.
